# EUROPEAN PATENT APPLICATION

(11) **EP 4 635 783 A1**
(43) Date of publication of application: **22.10.2025**
(21) Application number: 24189768.5
(22) Date of filing: 19.07.2024
(51) Int. Cl.: B60L 53/12, B60L 53/14, B60L 53/53, B60L 53/57, B60L 53/62, B60L 53/63, B60L 53/66, B60L 53/68, B60L 58/25, B60L 53/16, B60L 53/65, B60L 58/24

(54) **CHARGING AND DISCHARGING CONTROL METHOD AND APPARATUS, COMPUTER DEVICE, AND STORAGE MEDIUM**

(30) Priority: 19.04.2024 CN 202410473069
(71) Applicant: CSG Power Generation (Guangdong) Energy Storage Technology Co., Ltd, Guangzhou, Guangdong 510635 (CN)
(72) Inventor: WANG, Zhiqiang, Guangzhou, Guangdong, 510635 (CN); PENG, Cheng, Guangzhou, Guangdong, 510635 (CN); WAN, Sheng, Guangzhou, Guangdong, 510635 (CN); WU, Jiasheng, Guangzhou, Guangdong, 510635 (CN); CHENG, Chao, Guangzhou, Guangdong, 510635 (CN)
(74) Representative: Murgitroyd & Company

(57) **Abstract**

The present application relates to a charging and discharging control method and apparatus, a computer device, a storage medium, and a computer program product. The method includes: acquiring battery management information of an electric vehicle corresponding to a charging/discharging request in response to receiving the charging/discharging request; determining a charging and discharging power curve of the electric vehicle according to the battery management information; determining a target charging robot matching the charging and discharging power curve; and performing charging/discharging processing on the electric vehicle by the target charging robot according to the charging and discharging power curve.

## Description

### TECHNICAL FIELD

The present application relates to the field of charging robot technology, and particularly to a charging and discharging control method and apparatus, a computer device, a storage medium, and a computer program product.

### BACKGROUND

In the Vehicle-to-Grid (V2G) technology, a mobile charging robot can provide a more flexible charging/discharging service for electric vehicles, thereby implementing intelligent interactions between the grid and the electric vehicles.

In conventional technology, a charging robot usually requires an electric vehicle to discharge according to a maximum discharge power requirement. In this mode, a health degree of a battery of the vehicle is severely damaged, and in the case of a long discharge, safety risks, such as overloading, a thermal fatigue failure at a contact point, etc., of a related device of the charging robot and the electric vehicle may occur due to too high temperature and too long duration.

### SUMMARY

In view of this, for the above technical problem, it is necessary to provide a charging and discharging control method and apparatus, a computer device, a storage medium, and a computer program product, which can improve the safety of the charging and discharging processing of the electric vehicle.

In the first aspect of the present application, a charging and discharging control method is provided, including: acquiring battery management information of an electric vehicle corresponding to a charging/discharging request in response to receiving the charging/discharging request; determining a charging and discharging power curve of the electric vehicle according to the battery management information; regulating the charging and discharging power curve according to an association relationship between a charging/discharging power and a battery temperature of the electric vehicle and an association relationship between the charging/discharging power and a gun line temperature of a charging robot, wherein the charging and discharging power curve is configured to maximize a charging/discharging efficiency of the electric vehicle while ensuring that a battery of the electric vehicle and a gun line of the charging robot are in a safe state; determining a target charging robot matching the regulated charging and discharging power curve; and performing charging/discharging processing on the electric vehicle by the target charging robot according to the regulated charging and discharging power curve.

In an embodiment, determining the charging and discharging power curve of the electric vehicle according to the battery management information may include: obtaining a battery model corresponding to the electric vehicle according to vehicle information of the electric vehicle; obtaining limit power information of the battery of the electric vehicle according to the battery management information and the battery model; and performing curve fitting on the charging/discharging power of the battery according to the battery management information and the limit power information, and obtaining the charging and discharging power curve of the electric vehicle.

In an embodiment, the method may further include: before acquiring the battery management information of the electric vehicle corresponding to the charging/discharging request in response to receiving the charging/discharging request, acquiring vehicle information of an electric vehicle corresponding to a user registration request in response to receiving the user registration request; obtaining battery production information of the electric vehicle by querying according to the vehicle information; constructing a battery model corresponding to the battery of the electric vehicle according to the battery production information; and establishing a corresponding relationship between the battery model and the vehicle information.

In an embodiment, determining the target charging robot matching the charging and discharging power curve may include: acquiring operating power information of a charging robot in an idle state; when there exists a plurality of charging robots in the idle state, inputting a plurality of pieces of operating power information and the charging and the discharging power curve into a robot scheduling processing model, and obtaining target operating power information corresponding to the charging and discharging power curve; and determining a charging robot corresponding to the target operating power information as the target charging robot.

In an embodiment, the method may further include: after performing the charging/discharging processing on the electric vehicle by the target charging robot according to the charging and discharging power curve, acquiring battery temperature information of the electric vehicle and gun line temperature information of the gun line connected to the electric vehicle in a charging/discharging process; updating the charging and discharging power curve according to the battery temperature information and the gun line temperature information to obtain an updated charging and discharging power curve; and continuously performing the charging/discharging processing on the electric vehicle according to the updated charging and discharging power curve.

In an embodiment, updating the charging and discharging power curve according to the battery temperature information and the gun line temperature information to obtain an updated charging and discharging power curve may include: determining a battery temperature threshold of the electric vehicle and a gun line temperature threshold of the gun line; when a battery temperature indicated in the battery temperature information reaches the battery temperature threshold and/or a gun line temperature indicated in the gun line temperature information reaches the gun line temperature threshold, performing gradient decrease processing on the charging and discharging power curve according to the charging/discharging request, and obtaining the updated charging and discharging power curve.

In the second aspect of the present application, a charging and discharging control apparatus is provided, including: a request response module configured to obtain battery management information of an electric vehicle corresponding to a charging/discharging request in response to receiving the charging/discharging request; a power determination module configured to determine a charging and discharging power curve of the electric vehicle according to the battery management information, and further configured to regulate the charging and discharging power curve according to an association relationship between a charging/discharging power and a battery temperature of the electric vehicle and an association relationship between the charging/discharging power and a gun line temperature of a charging robot, the charging and discharging power curve being configured to maximize a charging/discharging efficiency of the electric vehicle while ensuring that a battery of the electric vehicle and a gun line of the charging robot are in a safe state; a robot matching module configured to determine a target charging robot matching the charging and discharging power curve; and a charging and discharging processing module configured to perform charging/discharging processing on the electric vehicle according to the charging and discharging power curve through the target charging robot.

In an embodiment, the power determination module is further configured to obtain a battery model corresponding to the electric vehicle according to vehicle information of the electric vehicle, obtain limit power information of the battery of the electric vehicle according to the battery management information and the battery model, perform curve fitting on a charging/discharging power of the battery according to the battery management information and the limit power information, and obtain the charging and discharging power curve of the electric vehicle.

In an embodiment, the apparatus further includes an information acquisition module configured to acquire vehicle information of an electric vehicle corresponding to a user registration request in response to receiving the user registration request, obtain battery production information of the electric vehicle by querying according to the vehicle information, construct a battery model corresponding to the battery of the electric vehicle according to the battery production information, and establish a corresponding relationship between the battery model and the vehicle information.

In an embodiment, the robot matching module is further configured to acquire operating power information of a charging robot in an idle state, input a plurality of pieces of operating power information and the charging and discharging power curve into a robot scheduling processing model when there exists a plurality of charging robots in the idle state, obtain target operating power information corresponding to the charging and discharging power curve, and determine a charging robot corresponding to the target operating power information as the target charging robot.

In an embodiment, the apparatus further includes a temperature monitoring module configured to acquire battery temperature information of the electric vehicle and gun line temperature information of a gun line connected to the electric vehicle in a charging/discharging process, update the charging and discharging power curve according to the battery temperature information and the gun line temperature information, to obtain an updated charging and discharging power curve, and continuously perform the charging/discharging processing on the electric vehicle according to the updated charging and discharging power curve.

In an embodiment, the apparatus further includes a power regulation module configured to: determine a battery temperature threshold of the electric vehicle and a gun line temperature threshold of the gun line; when a battery temperature indicated in the battery temperature information reaches the battery temperature threshold and/or a gun line temperature indicated in the gun line temperature information reaches the gun line temperature threshold, perform gradient decrease processing on the charging and discharging power curve according to the charging/discharging request, and obtain the updated charging and discharging power curve.

In the third aspect of the present application, a computer device is provided, including a processor and a memory storing a computer program. The processor, when executing the computer program, may implement the steps of: acquiring battery management information of an electric vehicle corresponding to a charging/discharging request in response to receiving the charging/discharging request; determining a charging and discharging power curve of the electric vehicle according to the battery management information; regulating the charging and discharging power curve according to an association relationship between a charging/discharging power and a battery temperature of the electric vehicle and an association relationship between the charging/discharging power and a gun line temperature of a charging robot, wherein the charging and discharging power curve is configured to maximize a charging/discharging efficiency of the electric vehicle while ensuring that a battery of the electric vehicle and a gun line of the charging robot are in a safe state; determining a target charging robot matching the charging and discharging power curve; and performing charging/discharging processing on the electric vehicle by the target charging robot according to the charging and discharging power curve.

In the fourth aspect of the present application, a computer-readable storage medium is provided, on which a computer program is stored. The computer program, when executed by a processor, may cause the processor to implement the steps of: acquiring battery management information of an electric vehicle corresponding to a charging/discharging request in response to receiving the charging/discharging request; determining a charging and discharging power curve of the electric vehicle according to the battery management information; regulating the charging and discharging power curve according to an association relationship between a charging/discharging power and a battery temperature of the electric vehicle and an association relationship between the charging/discharging power and a gun line temperature of a charging robot, wherein the charging and discharging power curve is configured to maximize a charging/discharging efficiency of the electric vehicle while ensuring that a battery of the electric vehicle and a gun line of the charging robot are in a safe state; determining a target charging robot matching the charging and discharging power curve; and performing charging/discharging processing on the electric vehicle by the target charging robot according to the charging and discharging power curve.

In the fifth aspect of the present application, a computer program product is provided, including a computer program. The computer program, when executed by a processor, may cause the processor to implement the steps of: acquiring battery management information of an electric vehicle corresponding to a charging/discharging request in response to receiving the charging/discharging request; determining a charging and discharging power curve of the electric vehicle according to the battery management information; regulating the charging and discharging power curve according to an association relationship between a charging/discharging power and a battery temperature of the electric vehicle and an association relationship between the charging/discharging power and a gun line temperature of a charging robot, wherein the charging and discharging power curve is configured to maximize a charging/discharging efficiency of the electric vehicle while ensuring that a battery of the electric vehicle and a gun line of the charging robot are in a safe state; determining a target charging robot matching the charging and discharging power curve; and performing charging/discharging processing on the electric vehicle by the target charging robot according to the charging and discharging power curve.

In the above-mentioned charging and discharging control method and apparatus, the computer device, the storage medium, and the computer program product, the battery management information of the electric vehicle corresponding to the charging/discharging request is acquired in response to receiving the charging/discharging request, the charging and discharging power curve of the electric vehicle is determined according to the battery management information, the target charging robot matching the charging and discharging power curve is determined, and the charging/discharging processing is performed on the electric vehicle by the target charging robot according to the charging and discharging power curve. With the method, a charging/discharging power that meets a performance of the battery of the electric vehicle can be calculated according to an actual condition of the battery of the electric vehicle, and the most appropriate target charging robot is allocated according to the charging/discharging power of the electric vehicle to provide the charging/discharging service, which can satisfy the charging/discharging service requirement, ensure vehicle safety and battery health, and effectively improve the safety of the electric vehicle during the charging/discharging processing.

### BRIEF DESCRIPTION OF THE DRAWINGS

FIG. 1 is an application environment diagram of a charging and discharging control method according to an embodiment of the present invention.
FIG. 2 is a flow chart of a charging and discharging control method according to an embodiment of the present invention.
FIG. 3 is a flow chart of steps of determining a charging and discharging power curve of an electric vehicle according to an embodiment of the present invention.
FIG. 4 is a flow chart of steps of updating a charging and discharging power curve according to an embodiment of the present invention.
FIG. 5 is a flow chart of a charging and discharging control method according to another embodiment of the present invention.
FIG. 6 is a flow chart of collecting vehicle information according to an embodiment of the present invention.
FIG. 7 is a flow chart of a charging/discharging preparation phase according to an embodiment of the present invention.
FIG. 8 is a flow chart of a dynamic regulation of a charging/discharging process according to an embodiment of the present invention.
FIG. 9 is a flow chart of a discharge scheduling process according to an embodiment of the present invention.
FIG. 10 is a structural block diagram of a charging and discharging control apparatus according to an embodiment of the present invention.
FIG. 11 is an internal structure diagram of a computer device according to an embodiment of the present invention.

### DETAILED DESCRIPTION

In order to make the purpose, technical solution and advantages of the present invention more clearly, the present invention is further elaborated below with reference to the accompanying drawings and embodiments. It should be appreciated that the specific embodiments described herein are used for explaining the present invention, rather than limiting the present invention.

It should be noted that user information (including but not limited to user device information, user personal information, etc.) and data (including but not limited to data used for analysis, stored data, displayed data, etc.) involved in the present application are all information and data authorized by the user or fully authorized by all parties, and the collection, use and processing of relevant data definitely comply with relevant laws, regulations and standards of relevant countries and regions.

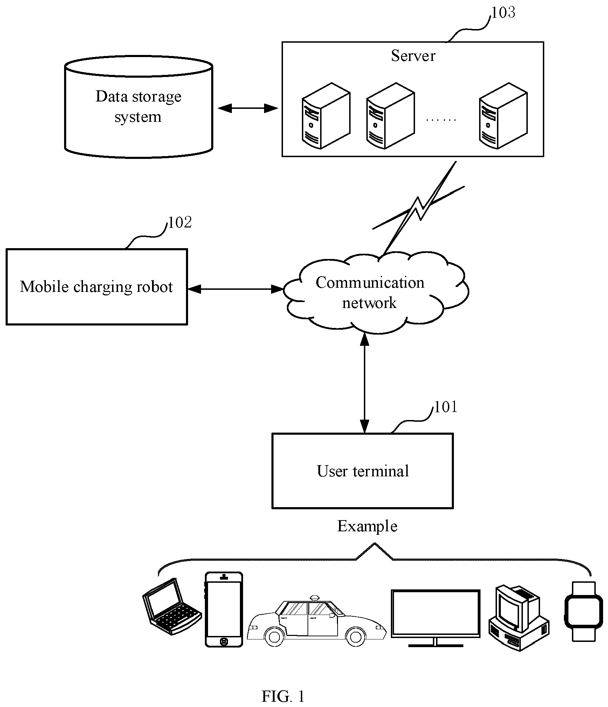

The charging and discharging control method provided in the embodiment of the present invention may be applied to the application environment as shown in FIG. 1. In FIG. 1, a user terminal 101, a mobile charging robot 102, and a server 103 communicate with each other through a network. The data storage system may store data that needs to be processed by the server 103. The data storage system may be integrated in the server 103, or may be placed on a cloud or other network servers. The user terminal 101 may be but is not limited to various personal computers, laptops, smartphones, tablets, Internet of Things devices, and portable wearable devices. The Internet of Things device may be an intelligent in-vehicle device, or the like. The portable wearable device may be a smart watch, a smart bracelet, a headset device, etc. The mobile charging robot 102 (referred to as a charging robot for short) is a Vehicle-to-Grid (V2G) intelligent robot that has a data processing capability and an autonomous moving function, and can provide a charging/discharging (or electricity sales) service to an electric vehicle. The server 103 may be implemented by using an independent server or a server cluster including a plurality of servers. The server 103 carries a management platform of the V2G.

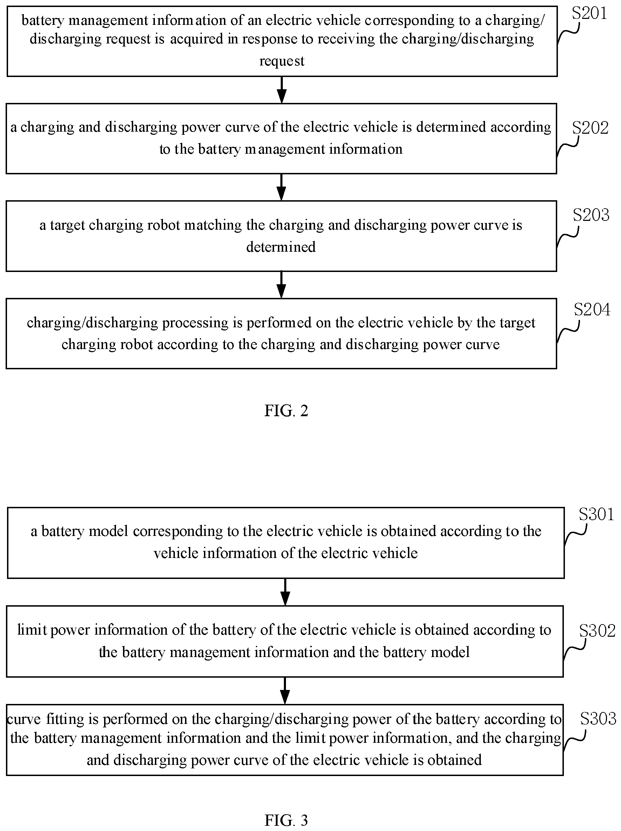

In an embodiment, as shown in FIG. 2, a charging and discharging control method is provided, and the method is applied to the server in FIG. 1 as an example for description. The method may include the following steps.

Step S201: battery management information of an electric vehicle corresponding to a charging/discharging request is acquired in response to receiving the charging/discharging request.

The battery management information includes parameter information such as a current, a voltage, and a temperature, etc., of the battery of the electric vehicle. The charging/discharging request refers to request information for requesting a charging robot to provide a service such as a charging or discharging service, or an electricity sales service, etc.

Specifically, when a user drives the electric vehicle to a parking lot, and needs a charging robot to travel to a parking space of the electric vehicle to provide the charging/discharging service, the user may log in to a V2G application program in the user terminal, and authorize the V2G application program to acquire vehicle information, battery management information, and other legal information related to the charging/discharging processing of the electric vehicle, so that a charging/discharging request is generated by the user terminal according to the vehicle information and the battery management information, and the charging/discharging request is transmitted to the server. The server receives the charging/discharging request, and obtains the battery management information and the vehicle information corresponding to the electric vehicle from the charging/discharging request.

In actual applications, the battery management information may be read and uploaded to the user terminal according to a Battery Management System (BMS) of the electric vehicle.

Step S202: a charging and discharging power curve of the electric vehicle is determined according to the battery management information.

The charging and discharging power curve refers to a curve describing power of the battery of the electric vehicle when charging or discharging is performed within a period of time.

Specifically, the server calculates the charging/discharging power of the electric vehicle according to the battery management information and a charging/discharging capacity in the charging/discharging request. In addition, the server may further regulate the calculated charging and discharging power curve according to an association relationship between a charging/discharging power and a battery temperature of the electric vehicle and an association relationship between the charging/discharging power and a gun line temperature, to obtain a charging and discharging power curve that can maximize the charging/discharging efficiency of the electric vehicle, and meanwhile ensure that the battery of the electric vehicle and the gun line of the charging robot are in a safe state.

Step S203: a target charging robot matching the charging and discharging power curve is determined.

It should be noted that although the name of the charging robot only embodies a charging function, the charging robot actually has a discharging function. The discharging function is configured to sell the electricity from the electric vehicle to the power grid. The charging robot may further implement other V2G-related functions. For example, the electric vehicle may sell the electricity to the power grid by means of a charging robot during the peak power consumption of the power grid, and the electric vehicle may be charged by means of the charging robot during the trough power consumption of the power grid.

Specifically, after obtaining the charging and discharging power curve of the electric vehicle, the server may use the charging and discharging power curve as a basis to search for a charging robot adapted to the charging and discharging power curve, that is, to determine a target charging robot. The server may simultaneously allocate, for a plurality of electric vehicles, target charging robots respectively matching the plurality of electric vehicles.

Step S204: charging/discharging processing is performed on the electric vehicle by the target charging robot according to the charging and discharging power curve.

Specifically, the server issues a charging/discharging instruction to the target charging robot, and the target charging robot performs route planning according to position information of the electric vehicle, to travel to a parking space of the electric vehicle. The target charging robot releases a gun line assembled on the target charging robot. The user connects the gun line to the electric vehicle. After the connection succeeds, the target charging robot performs the charging/discharging processing on the electric vehicle according to the charging and discharging power curve. In the charging/discharging process, the target charging robot may monitor the battery temperature of the electric vehicle and the gun line temperature, and reports the battery temperature and the gun line temperature to the server in real time, in order to ensure safety of the charging/discharging process and avoid failures of the battery and the gun line due to overheating.

Further, after the discharging processing is started, if there are a plurality of charging robots in the scenario needing to discharge simultaneously to satisfy an overall discharging requirement of the server for the scenario, the server may first read a current charging and discharging power curve of each charging robot, and then regulate each charging and discharging power curve according to the overall discharging requirement to obtain an updated charging and discharging power curve. Further, the charging robot performs the discharging processing according to the updated charging and discharging power curve, so that a healthy operation of the battery of the electric vehicle and a normal device temperature of the charging robot can be maintained, and meanwhile the overall discharging requirement of the server can also be satisfied, thereby implementing global regulation and control on discharging powers of the plurality of charging robots in the scenario.

In the above-mentioned charging and discharging control method, the battery management information of the electric vehicle corresponding to the charging/discharging request is acquired in response to receiving the charging/discharging request, the charging and discharging power curve of the electric vehicle is determined according to the battery management information, the target charging robot matching the charging and discharging power curve is determined, and the charging/discharging processing is performed on the electric vehicle by the target charging robot according to the charging and discharging power curve. With the method, a charging/discharging power that matches the performance of the battery of the electric vehicle can be calculated according to an actual condition of the battery of the electric vehicle, and the most appropriate target charging robot is allocated according to the charging/discharging power of the electric vehicle to provide the charging/discharging service, which can satisfy the charging/discharging service requirement, ensure vehicle safety and battery health, and effectively improve the safety of the electric vehicle during the charging/discharging processing.

In an embodiment, as shown in FIG. 3, the above-mentioned step S202 in which the charging and discharging power curve of the electric vehicle is determined according to the battery management information may specifically include the following content.

Step S301: a battery model corresponding to the electric vehicle is obtained according to the vehicle information of the electric vehicle.

The battery model refers to data describing a battery in terms of production parameters, a battery performance, and the like. For example, the battery model may include a brand, a model number, a capacity, a generation batch, a gun line temperature threshold, and the like.

Specifically, the server may query a battery information sharing database according to the vehicle information of the electric vehicle, to obtain a battery model matching the vehicle information. The battery information sharing database stores battery models of electric vehicles of a plurality of users. Table 1 below illustrates partial data in a battery model.

**Table 1**

| Battery model | | | |
|---|---|---|---|
| Brand | Model number | Capacity | Generation batch |

Step S302: limit power information of the battery of the electric vehicle is obtained according to the battery management information and the battery model.

The limit power information indicates a maximum/minimum power reached by the battery of the electric vehicle.

Specifically, the server obtains, according to the battery model, the limit power information that can be originally reached by the battery of the electric vehicle, and marks the limit power information as original limit power information. However, the battery may generate a certain loss with increasing use time. Therefore, the server may further correct the original limit power information according to the battery management information of the battery, and obtain, through a calculation, limit power information that can be currently reached by the battery of the electric vehicle, which is marked as current limit power information. By taking the battery performance consumption of the electric vehicle into consideration, the limit power information of the battery of the electric vehicle can be more accurately determined.

Step S303: curve fitting is performed on the charging/discharging power of the battery according to the battery management information and the limit power information, and the charging and discharging power curve of the electric vehicle is obtained.

Specifically, the server performs the curve fitting on the charging/discharging power of the battery may include: the server performs the curve fitting and Bayesian optimization processing on the charging/discharging power of the battery according to battery load information in the battery management information; or the server processes the charging/discharging power of the battery with the least square method, determines the battery load information in the battery management information and the current limit power information as a constraint condition of the curve fitting process, and obtain an optimal solution of the charging/discharging power after a global convergence. Accordingly, the server obtains the charging and discharging power curve of the battery of the electric vehicle. The battery load information indicates an available electric quantity of the battery of the electric vehicle.

In the embodiment, the current limit power information of the battery of the electric vehicle is determined according to the battery model and the battery management information corresponding to the electric vehicle. During the calculation of the charging and discharging power curve, the actual performance of the battery of the electric vehicle is further taken into account according to the battery management information and the current limit power information, so that the calculated limit power information does not exceed the upper limit of the current actual performance of the battery, rather than using the original power parameter of the battery stiffly, thereby effectively ensuring the safety of the subsequent charging/discharging process.

In an embodiment, before the above-mentioned step S201 that the battery management information of the electric vehicle corresponding to a charging/discharging request is acquired in response to receiving the charging/discharging request, the method may further include: vehicle information of the electric vehicle corresponding to a user registration request is acquired in response to receiving the user registration request, battery production information of the electric vehicle is obtained by querying according to the vehicle information, a battery model corresponding to the battery of the electric vehicle is constructed according to the battery production information, and a corresponding relationship between the battery model and the vehicle information is established.

The battery production information refers to data describing the battery in terms of production parameters.

When using the charging/discharging service of the charging robot for the first time, the user needs to register an account through the user terminal, and enter the vehicle-related information. Specifically, the user terminal transmits a user registration request to the server, the server returns a registration page to the user terminal for display in response to receiving the user registration request, and acquires the vehicle information of the electric vehicle entered in the registration page displayed on the user terminal. The server queries a manufacturer of the electric vehicle from a shared database according to the vehicle information, and obtains the battery production information and the battery performance information of the electric vehicle. The server establishes, according to the battery production information and the battery performance information, the battery model corresponding to the battery of the electric vehicle, establishes a corresponding relationship between the battery model and the vehicle information, and stores the battery model and the corresponding relationship into a battery information sharing database. Alternatively, the server may synchronize the battery model to a user portrait of a user account registered by the user.

The vehicle information refers to related information describing the electric vehicle. For example, the vehicle information may include a manufacturer, a production batch, a driving mileage, a brand, a model, a frame number, an engine serial number, etc. Table 2 below illustrates partial data in vehicle information.

**Table 2**

| Vehicle information | | | |
|---|---|---|---|
| Brand | Model number | Frame number | Engine serial number |

In the embodiment, the battery production information of the electric vehicle is obtained by querying according to the vehicle information of the electric vehicle corresponding to the user registration request, the battery model corresponding to the battery of the electric vehicle is constructed according to the battery production information, and the corresponding relationship between the battery model and the vehicle information is established. Accordingly, the vehicle information and the battery model are pre-collected, in order to quickly query the corresponding information in the subsequent provision of the charging/discharging service for the electric vehicle.

In an embodiment, the step S203 that the target charging robot matching the charging and discharging power curve is determined may specifically include: operating power information of a charging robot in an idle state is acquired; when there exists a plurality of charging robots in the idle state, a plurality of pieces of operating power information and the charging and the discharging power curve are input into a robot scheduling processing model, and target operating power information corresponding to the charging and discharging power curve is obtained; a charging robot corresponding to the target operating power information is determined as the target charging robot.

The robot scheduling processing model refers to a model configured to analyze, from the inputted operating power information and charging and discharging power curve, target operating power information most matching the charging and discharging power curve. The robot scheduling processing model may be obtained by optimizing a deep neural network by using a nearest neighbor optimization algorithm.

Specifically, when the server allocates a charging robot to the electric vehicle to process the charging/discharging service, a charging robot in the idle state is preferentially acquired. If there is no charging robot in the idle state currently, the server may perform a comprehensive analysis according to charging/discharging end time of a charging robot and a distance from the parking space. If the server acquires a plurality of pieces of operating power information of charging robots in the idle state, or there are a plurality of electric vehicles needing the charging/discharging service, that is, there are a plurality of charging and discharging power curves, the server may input one or more pieces of operating power information and one or more charging and discharging power curves into the robot scheduling processing model, to match the operating power information with the charging and discharging power curve through the robot scheduling processing model, thereby obtaining the target operating power information optimal for each charging and discharging power curve.

Further, the server generates a charging/discharging service instruction corresponding to the charging and discharging power curve, and transmits the charging/discharging service instruction to a target charging robot corresponding to the target operating power information, to perform the charging/discharging processing on the electric vehicle by the target charging robot.

In addition, in addition to using the charging and discharging power curve as a processing basis, the server may further determine a gun line temperature curve corresponding to the charging and discharging power curve according to the association relationship between the discharge power and the gun line temperature. Further, the charging and discharging power curve, the gun line temperature curve, and the operating power information and a gun line temperature threshold of the charging robot are input into the robot scheduling processing model, in order to obtain the target charging robot with the operating power information matching the charging and discharging power curve and the gun line temperature curve matching the gun line temperature threshold.

In an actual application, the server may perform fine-tuning training on the pre-trained deep neural network by using a nearest neighbor optimization algorithm, so that a network obtained through training can determine the target operating power information corresponding to the charging and discharging power curve and the gun line temperature curve, and the trained network is determined as the robot scheduling processing model.

In the embodiment, the target operating power information corresponding to the charging and discharging power curve is obtained through the robot scheduling processing model, and the charging robot corresponding to the target operating power information is determined as the target charging robot. Accordingly, the scheduling and allocation of the target charging robot are implemented, which can allocate the charging robot satisfying the performance requirement of the electric vehicle according to the actual performance of the electric vehicle, thereby improving rationality of scheduling and allocation of the charging robot.

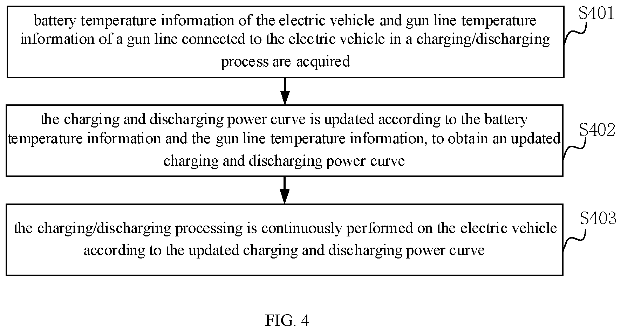

In an embodiment, as shown in FIG. 4, after the above-mentioned step S204 that the charging/discharging processing is performed on the electric vehicle by the target charging robot according to the charging and discharging power curve, the method may further include:

Step S401: battery temperature information of the electric vehicle and gun line temperature information of a gun line connected to the electric vehicle in a charging/discharging process are acquired.

The battery temperature information indicates a temperature of the battery of the electric vehicle. The gun line temperature information indicates a temperature of a gun line of a charging robot connected to the electric vehicle.

Specifically, in a process of performing the charging/discharging processing on the electric vehicle by the server according to the charging and discharging power curve, after the charging robot connected to the electric vehicle is authorized by the user terminal, the charging robot may read the battery temperature information of the electric vehicle in real time through a battery management system (BMS) of the electric vehicle, and read, through a temperature sensor, the gun line temperature information of the gun line assembled in real time, and then transmit the battery temperature information and the gun line temperature information to the server. The server obtains the battery temperature information of the electric vehicle and the gun line temperature information of the gun line connected to the electric vehicle in the charging/discharging process.

Step S402: the charging and discharging power curve is updated according to the battery temperature information and the gun line temperature information, to obtain an updated charging and discharging power curve.

Specifically, if the server operates for a preset period of time according to the charging and discharging power curve, the battery temperature information and the gun line temperature information are all maintained below a temperature threshold, and there is still room to rise before reaching the temperature threshold, the server may perform a power increase regulation on the charging and discharging power curve, to accelerate the charging/discharging progress and improve the charging/discharging efficiency. When one of the battery temperature information and the gun line temperature information exceeds a corresponding temperature threshold, the server may perform a power decrease regulation on the charging and discharging power curve, to decrease the battery temperature and the gun line temperature, and ensure safe use of the battery and the gun line.

Step S403: the charging/discharging processing is continuously performed on the electric vehicle according to the updated charging and discharging power curve.

Specifically, the server transmits the updated charging and discharging power curve to the target charging robot, and the target charging robot continues to perform the charging/discharging processing on the electric vehicle according to the updated charging and discharging power curve. In addition, the target charging robot may further display, on a screen, prompt information indicating the updating of the charging/discharging power for the user to view.

In the embodiment, the battery temperature information of the electric vehicle and the gun line temperature information of the gun line connected to the electric vehicle in the charging/discharging process are collected in real time, so that the charging and discharging power curve can be dynamically regulated according to the battery temperature information and the gun line temperature information in subsequent steps, to obtain the updated charging and discharging power curve. Accordingly, the charging/discharging power of the electric vehicle can be dynamically regulated according to the updated charging and discharging power curve, which ensures the safety in the charging/discharging process, and meanwhile further flexibly improves the efficiency of the charging/discharging processing.

In an embodiment, in the above-mentioned step S402 that the charging and discharging power curve is updated according to the battery temperature information and the gun line temperature information, to obtain the updated charging and discharging power curve may further include: a battery temperature threshold of the electric vehicle and a gun line temperature threshold of the gun line are determined; when a battery temperature indicated in the battery temperature information reaches the battery temperature threshold and/or a gun line temperature indicated in the gun line temperature information reaches the gun line temperature threshold, gradient decrease processing is performed on the charging and discharging power curve according to the charging/discharging request, and the updated charging and discharging power curve is obtained.

Specifically, the server obtains the battery temperature threshold of the electric vehicle based on the battery model, and obtains the gun line temperature threshold of the gun line of the target charging robot by querying. When it is detected that the battery temperature information indicates that the battery temperature is greater than or equal to the battery temperature threshold and/or the gun line temperature information indicates that the gun line temperature is greater than or equal to the gun line temperature threshold, the power regulation processing is performed on the charging and discharging power curve by using a random gradient decrease algorithm with the charging/discharging capacity in the charging/discharging request as a constraint condition, and the updated charging and discharging power curve is obtained.

Further, after the charging robot operates for the preset period of time according to the charging and discharging power curve, when the battery temperature information indicates that the battery temperature is below the battery temperature threshold and the gun line temperature information indicates that the gun line temperature is also below the gun line temperature threshold, the charging robot may continue to perform the charging/discharging processing according to the charging and discharging power curve.

In the embodiment, when the battery temperature reaches the battery temperature threshold and/or the gun line temperature reaches the gun line temperature threshold, the gradient decrease processing is performed on the charging and discharging power curve according to the charging/discharging capacity in the charging/discharging request, so that the updated charging and discharging power curve is obtained, which meets the charging/discharging capacity in the charging/discharging request, and the charging/discharging power is further decreased. Accordingly, the battery temperature and the gun line temperature are reduced, and the safe operation is guaranteed.

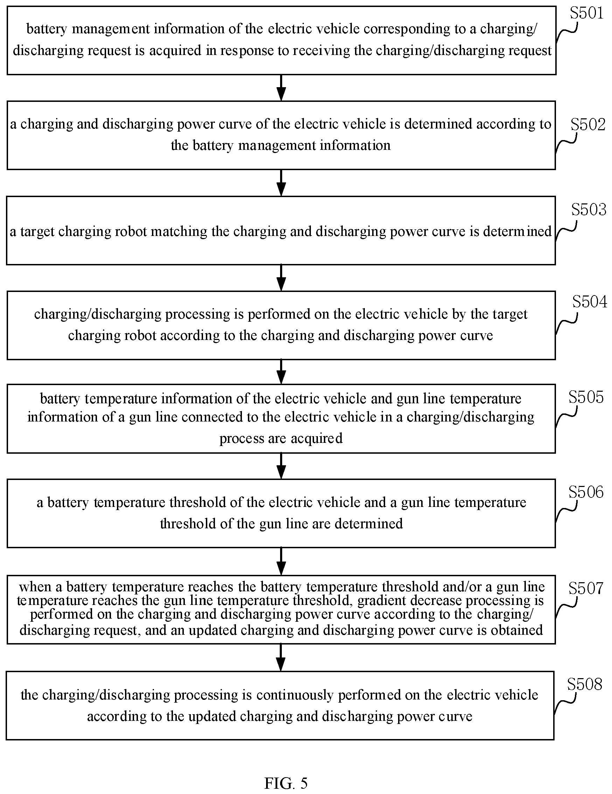

In an embodiment, as shown in FIG. 5, another charging and discharging control method is provided, which is applied to the server in FIG. 1 as an example for description. The method may include the following steps.

Step S501: battery management information of the electric vehicle corresponding to a charging/discharging request is acquired in response to receiving the charging/discharging request.

Step S502: a charging and discharging power curve of the electric vehicle is determined according to the battery management information.

Step S503: a target charging robot matching the charging and discharging power curve is determined.

Step S504: charging/discharging processing is performed on the electric vehicle by the target charging robot according to the charging and discharging power curve.

Step S505: battery temperature information of the electric vehicle and gun line temperature information of a gun line connected to the electric vehicle in a charging/discharging process are acquired.

Step S506: a battery temperature threshold of the electric vehicle and a gun line temperature threshold of the gun line are determined.

Step S507: when a battery temperature indicated by the battery temperature information reaches the battery temperature threshold and/or a gun line temperature indicated by the gun line temperature information reaches the gun line temperature threshold, gradient decrease processing is performed on the charging and discharging power curve according to the charging/discharging request, and an updated charging and discharging power curve is obtained.

Step S508: the charging/discharging processing is continuously performed on the electric vehicle according to the updated charging and discharging power curve.

With the above-mentioned charging and discharging control method, the following advantages can be achieved. The charging/discharging power matching the performance of the electric vehicle can be calculated according to the actual condition of the battery of the electric vehicle, and the most appropriate charging robot is allocated according to the charging/discharging power to provide the charging/discharging service. Accordingly, the vehicle safety and battery health can be guaranteed while the charging/discharging service requirement is satisfied, thereby effectively improving the safety of the charging/discharging processing of the electric vehicle.

In order to describe the charging and discharging control method provided in the embodiments of the present invention more clearly, the charging and discharging control method will be detailed with a specific embodiment below. Another charging and discharging control method is provided, which can be applied to a Vehicle-to-Grid (V2G) operation platform established in the server in FIG. 1. The method may specifically include the following content.

### (1) Vehicle owner registration phase

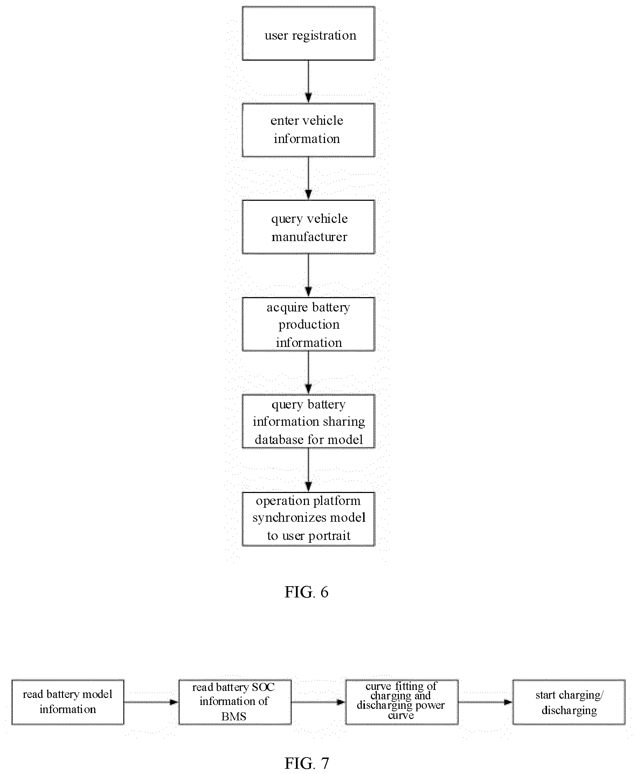

FIG. 6 is a flow chart of collecting vehicle information. The vehicle owner registers a user by using the user terminal, and enters vehicle information of the electric vehicle. The V2G operation platform queries a vehicle manufacturer of the electric vehicle according to the vehicle information to obtain battery production information of the electric vehicle. The operation platform may construct a battery model according to the battery production information, or may obtain a corresponding battery model by querying the battery information sharing database according to the battery production information, so that the operation platform synchronizes the battery model to a user portrait of the registered user account.

### (2) Charging/discharging phase

The charging robot calculates a limit discharge power, an optimal discharge power, and a charging and discharging power curve of the battery according to the BMS information of the battery, state of charge (SOC) information, and the battery model of the electric vehicle by using a probability model algorithm such as a least square method, Bayesian optimization, etc., and feeds back a calculation result to the operation platform. After determining the charging and discharging power curve, the operation platform schedules the charging robot to start charging and discharging. FIG. 7 is a flow chart of a charging/discharging preparation phase.

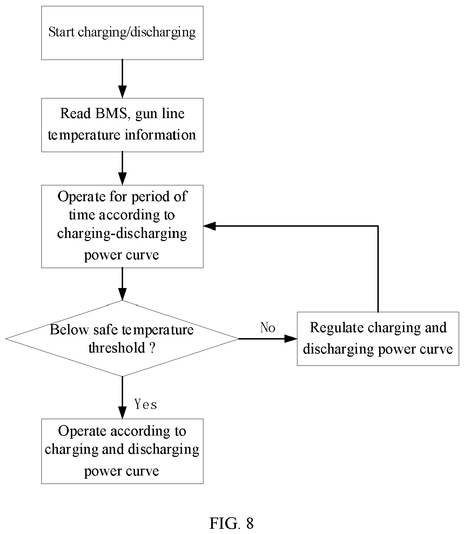

After the charging/discharging starts, the operating platform reads the temperature information of the battery of the electric vehicle and the temperature information of the gun line of the charging robot in real time. After the charging/discharging processing is performed according to the charging and discharging power curve for a period of time, detect whether the temperatures indicated by the temperature information are below the safe temperature thresholds. When the temperatures exceed the safe temperature thresholds respectively, the operation platform adaptively regulates the charging and discharging power curve through the random gradient decrease algorithm according to the discharge requirement and the temperature conditions of the charging robot and the BMS of the electric vehicle, to satisfy the charging/discharging service requirement as much as possible in the case of ensuring the vehicle safety and the battery health. When the temperatures are below the safe temperature thresholds respectively, the charging/discharging processing is continuously performed according to the charging and discharging power curve. FIG. 8 is a flow chart of a dynamic regulation of the charging/discharging process.

### (3) Discharge scheduling phase

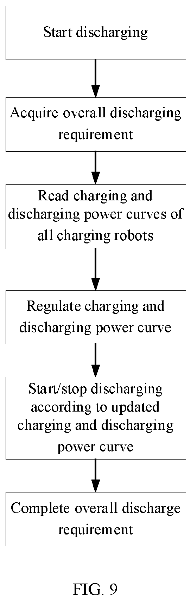

After the discharge starts, if there are a plurality of charging robots in the scenario need to discharge simultaneously to meet an overall discharge requirement of the server for the scenario, the operation platform may first read the charging and discharging power curves of all charging robots, and then regulate each charging and discharging power curve according to the overall discharge requirement by using an algorithm, to obtain updated charging and discharging power curves. Further, the charging robots start/stop the discharge processing according to the updated charging and discharging power curves respectively, and finally the overall discharge requirement is completed. FIG. 9 is a flow chart of a discharge scheduling process.

In the embodiment, the charging/discharging power that meets the performance of the electric vehicle can be calculated according to the actual condition of the battery of the electric vehicle, and the most appropriate target charging/discharging robot is allocated according to the charging/discharging power of the electric vehicle to provide the charging/discharging service. In addition to satisfying the requirement of the charging/discharging service, the vehicle safety and battery health can be guaranteed, thereby effectively improving the safety of the charging/discharging processing of the electric vehicle.

It should be appreciated that, although steps in the flow charts related to the aforementioned embodiments are sequentially displayed follow the arrow directions, these steps are not definitely sequentially performed in an order indicated by the arrows. Unless expressly stated in the description, these steps are not performed in a strict order, and these steps may be performed in other orders. In addition, at least a part of steps in the flow charts involved in the aforementioned embodiments may include multiple steps or multiple phases. These steps or phases are not definitely performed at the same moment, but may be performed at different moments. These steps or phases are not definitely performed sequentially, but may be performed in turns or alternately with other steps or at least a part of steps or phases in other steps.

Based on the same invention concept, in an embodiment of the present invention, a charging and discharging control apparatus configured to implement the aforementioned charging and discharging control method is provided. An implementation solution provided by the apparatus is similar to the implementation solution described in the aforementioned method. Therefore, for specific limitations in one or more embodiments of the charging and discharging control apparatus provided below, reference can be made to the aforementioned limitations on the charging and discharging control method described above, which will not be repeated herein.

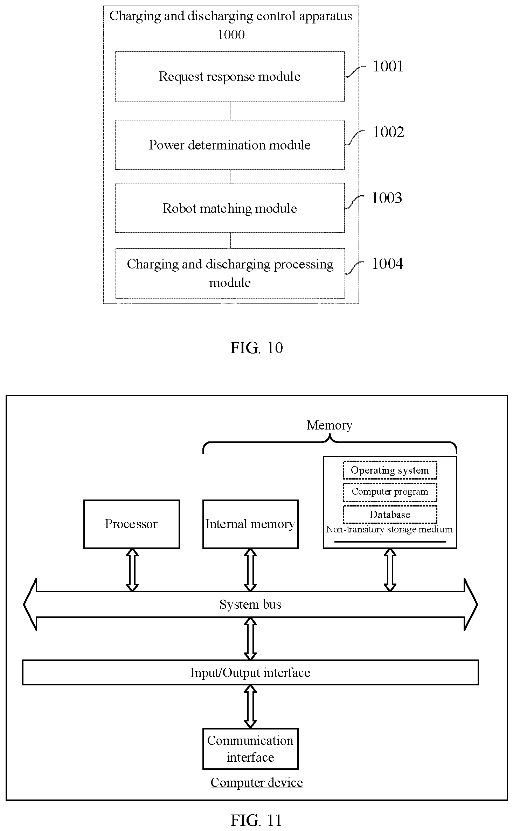

In an embodiment, as shown in FIG. 10, a charging and discharging control apparatus 1000 is provided, which may include a request response module 1001, a power determination module 1002, a robot matching module 1003, and a charging and discharging processing module 1004.

The request response module 1001 is configured to obtain battery management information of an electric vehicle corresponding to a charging/discharging request in response to receiving the charging/discharging request.

The power determination module 1002 is configured to determine a charging and discharging power curve of the electric vehicle according to the battery management information.

The robot matching module 1003 is configured to determine a target charging robot matching the charging and discharging power curve.

The charging and discharging processing module 1004 is configured to perform charging/discharging processing on the electric vehicle according to the charging and discharging power curve through the target charging robot.

In an embodiment, the power determination module 1002 is further configured to obtain a battery model corresponding to the electric vehicle according to vehicle information of the electric vehicle, obtain limit power information of the battery of the electric vehicle according to the battery management information and the battery model, perform curve fitting on a charging/discharging power of the battery according to the battery management information and the limit power information, and obtain the charging and discharging power curve of the electric vehicle.

In an embodiment, the charging and discharging control apparatus 1000 may further include an information acquisition module. The information acquisition module is configured to acquire vehicle information of an electric vehicle corresponding to a user registration request in response to receiving the user registration request, obtain battery production information of the electric vehicle by querying according to the vehicle information, construct a battery model corresponding to the battery of the electric vehicle according to the battery production information, and establish a corresponding relationship between the battery model and the vehicle information.

In an embodiment, the robot matching module 1003 is further configured to acquire operating power information of a charging robot in an idle state, input a plurality of pieces of operating power information and the charging and discharging power curve into a robot scheduling processing model when there exists a plurality of charging robots in the idle state, obtain target operating power information corresponding to the charging and discharging power curve, and determine a charging robot corresponding to the target operating power information as the target charging robot.

In an embodiment, the charging and discharging control apparatus 1000 may further include a temperature monitoring module. The temperature monitoring module is configured to acquire battery temperature information of the electric vehicle and gun line temperature information of a gun line connected to the electric vehicle in a charging/discharging process, update the charging and discharging power curve according to the battery temperature information and the gun line temperature information, to obtain an updated charging and discharging power curve, and continuously perform the charging/discharging processing on the electric vehicle according to the updated charging and discharging power curve.

In an embodiment, the charging and discharging control apparatus 1000 may further include a power regulation module. The power regulation module is configured to: determine a battery temperature threshold of the electric vehicle and a gun line temperature threshold of the gun line; when a battery temperature indicated in the battery temperature information reaches the battery temperature threshold and/or a gun line temperature indicated in the gun line temperature information reaches the gun line temperature threshold, perform gradient decrease processing on the charging and discharging power curve according to the charging/discharging request, and obtain the updated charging and discharging power curve.

All or part of the modules in the above-mentioned charging and discharging control apparatus may be implemented by using software, hardware, and a combination thereof. The modules may be embedded in or independent of a processor in a computer device in a hardware form, or may be stored in a memory in the computer device in a software form, so that the processor can invoke and execute operations corresponding to the modules.

In an embodiment, a computer device is provided. The computer device may be a server, and an internal structure diagram of the computer device may be as shown in FIG. 11. The computer device may include a processor, a memory, an Input/Output (I/O) interface, and a communication interface. The processor, the memory, and the Input/Output interface are connected to each other through a system bus, and the communication interface is connected to the system bus through the Input/Output interface. The processor of the computer device is configured to provide computing and control capabilities. The memory of the computer device may include a non-transitory storage medium and an internal memory. The non-transitory storage medium stores an operating system, a computer program, and a database. The internal memory provides an environment for running an operating system and a computer program in a non-transitory storage medium. The database of the computer device is configured to store data such as a charging and discharging power curve, etc. The Input/Output interface of the computer device is configured to exchange information between the processor and an external device. The communication interface of the computer device is configured to communicate with an external terminal through a network connection. The computer program is executed by a processor to implement a charging and discharging control method.

A person skilled in the art may understand that the structure shown in FIG. 11 is merely a block diagram of partial structure related to the solution of the present application, and does not constitute a limitation on a computer device to which the solution of the present application is applied. A specific computer device may include more or less components than those shown in the figure, or combine some components, or have different component arrangements.

In an embodiment, a computer device is further provided, which may include a processor and a memory storing a computer program. The processor, when executing the computer program, may implement the steps in the above-mentioned method embodiments.

In an embodiment, a computer-readable storage medium is provided, on which a computer program is stored. The computer program, when executed by a processor, may cause the processor to implement the steps in the above-mentioned method embodiments.

In an embodiment, a computer program product is provided, which may include a computer program. The computer program, when executed by a processor, may cause the processor to implement the steps in the above-mentioned method embodiments.

A person of ordinary skill in the art should understand that all or part of the processes in the above-mentioned embodiment methods can be implemented by instructing related hardware through computer-readable instructions. The computer-readable instructions can be stored in a non-transitory computer-readable storage medium. When the computer-readable instructions are executed, the processes of the embodiments of the above-mentioned methods may be included. Any reference to a memory, a database, or other medium used in the embodiments provided in the present application may include at least one of a non-transitory memory and a transitory memory. The non-transitory memory may include a read-only memory (ROM), a magnetic tape, a floppy disk, a flash memory, an optical storage, a high-density embedded non-transitory memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM) or an external cache memory, etc. By way of illustration and not limitation, the RAM may be in various forms, such as a static random access memory (SRAM) or a dynamic random access memory (DRAM). The database involved in each embodiment provided in the present invention may include at least one of a relational database and a non-relational database. The non-relational databases may include, but are not limited to, distributed databases based on blockchain. The processor involved in each embodiment provided in the present invention may be a general-purpose processor, a central processing unit, a graphics processor, a digital signal processor, a programmable logic unit, a data processing logic unit based on quantum computing, etc., but is not limited thereto.

The technical features of the above embodiments may be arbitrarily combined. To make the description concise, all possible combinations of the technical features in the above embodiments are not described. However, as long as there is no contradiction in the combinations of these technical features, these combinations should be considered to be within the scope of the present application.

The above-described embodiments merely express several implementation modes of the present application, and the description thereof is relatively specific and detailed, but it should not be construed as limiting the scope of the present application. It should be pointed out that, ordinary technicians in this field can make several modifications and improvements without departing from the concept of the present application, which all fall within the scope of protection of the present application. Therefore, the protection scope of the present application should be subj ect to the appended claims.

## Claims

1. A charging and discharging control method, **characterized by** comprising:
acquiring (S201) battery management information of an electric vehicle corresponding to a charging/discharging request in response to receiving the charging/discharging request;
determining (S202) a charging and discharging power curve of the electric vehicle according to the battery management information;
regulating the charging and discharging power curve according to an association relationship between a charging/discharging power and a battery temperature of the electric vehicle and an association relationship between the charging/discharging power and a gun line temperature of a charging robot, wherein the charging and discharging power curve is configured to maximize a charging/discharging efficiency of the electric vehicle while ensuring that a battery of the electric vehicle and the gun line of the charging robot are in a safe state;
determining (S203) a target charging robot matching the regulated charging and discharging power curve; and
performing (S204) charging/discharging processing on the electric vehicle by the target charging robot according to the regulated charging and discharging power curve.

2. The method according to claim 1, wherein determining the charging and discharging power curve of the electric vehicle according to the battery management information comprises:
obtaining (S301) a battery model corresponding to the electric vehicle according to vehicle information of the electric vehicle;
obtaining (S302) limit power information of the battery of the electric vehicle according to the battery management information and the battery model; and
performing (S303) curve fitting on the charging/discharging power of the battery according to the battery management information and the limit power information, and obtaining the charging and discharging power curve of the electric vehicle.

3. The method according to claim 2, further comprising:
before acquiring the battery management information of the electric vehicle corresponding to the charging/discharging request in response to receiving the charging/discharging request,
acquiring vehicle information of an electric vehicle corresponding to a user registration request in response to receiving the user registration request;
obtaining battery production information of the electric vehicle by querying according to the vehicle information;
constructing a battery model corresponding to the battery of the electric vehicle according to the battery production information; and
establishing a corresponding relationship between the battery model and the vehicle information.

4. The method according to claim 1, wherein determining the target charging robot matching the charging and discharging power curve comprises:
acquiring operating power information of a charging robot in an idle state;
when there exists a plurality of charging robots in the idle state, inputting a plurality of pieces of operating power information and the charging and the discharging power curve into a robot scheduling processing model, and obtaining target operating power information corresponding to the charging and discharging power curve; and
determining a charging robot corresponding to the target operating power information as the target charging robot.

5. The method according to claim 1, further comprising:
after performing the charging/discharging processing on the electric vehicle by the target charging robot according to the charging and discharging power curve,
acquiring (S401) battery temperature information of the electric vehicle and gun line temperature information of the gun line connected to the electric vehicle in a charging/discharging process;
updating (S402) the charging and discharging power curve according to the battery temperature information and the gun line temperature information to obtain an updated charging and discharging power curve; and
continuously performing (S403) the charging/discharging processing on the electric vehicle according to the updated charging and discharging power curve.

6. The method according to claim 5, wherein updating the charging and discharging power curve according to the battery temperature information and the gun line temperature information to obtain an updated charging and discharging power curve comprises:
determining a battery temperature threshold of the electric vehicle and a gun line temperature threshold of the gun line; and
when a battery temperature indicated by the battery temperature information reaches the battery temperature threshold and/or a gun line temperature indicated by the gun line temperature information reaches the gun line temperature threshold, performing gradient decrease processing on the charging and discharging power curve according to the charging/discharging request, and obtaining the updated charging and discharging power curve.

7. A charging and discharging control apparatus (1000), **characterized by** comprising:
a request response module (1001), configured to obtain battery management information of an electric vehicle corresponding to a charging/discharging request in response to receiving the charging/discharging request;
a power determination module (1002), configured to determine a charging and discharging power curve of the electric vehicle according to the battery management information, and further configured to regulate the charging and discharging power curve according to an association relationship between a charging/discharging power and a battery temperature of the electric vehicle and an association relationship between the charging/discharging power and a gun line temperature of a charging robot, wherein the charging and discharging power curve is configured to maximize a charging/discharging efficiency of the electric vehicle while ensuring that a battery of the electric vehicle and a gun line of the charging robot are in a safe state;
a robot matching module (1003), configured to determine a target charging robot matching the charging and discharging power curve; and
a charging and discharging processing module (1004), configured to perform charging/discharging processing on the electric vehicle according to the charging and discharging power curve through the target charging robot.

8. The apparatus (1000) according to claim 7, wherein the power determination module (1002) is further configured to obtain a battery model corresponding to the electric vehicle according to vehicle information of the electric vehicle, obtain limit power information of the battery of the electric vehicle according to the battery management information and the battery model, perform curve fitting on a charging/discharging power of the battery according to the battery management information and the limit power information, and obtain the charging and discharging power curve of the electric vehicle.

9. The apparatus (1000) according to claim 7, further comprising an information acquisition module configured to acquire vehicle information of an electric vehicle corresponding to a user registration request in response to receiving the user registration request, obtain battery production information of the electric vehicle by querying according to the vehicle information, construct a battery model corresponding to the battery of the electric vehicle according to the battery production information, and establish a corresponding relationship between the battery model and the vehicle information.

10. The apparatus (1000) according to claim 7, wherein the robot matching module (1003) is further configured to acquire operating power information of a charging robot in an idle state, input a plurality of pieces of operating power information and the charging and discharging power curve into a robot scheduling processing model when there exists a plurality of charging robots in the idle state, obtain target operating power information corresponding to the charging and discharging power curve, and determine a charging robot corresponding to the target operating power information as the target charging robot.

11. The apparatus (1000) according to claim 7, further comprising a temperature monitoring module configured to acquire battery temperature information of the electric vehicle and gun line temperature information of a gun line connected to the electric vehicle in a charging/discharging process, update the charging and discharging power curve according to the battery temperature information and the gun line temperature information, to obtain an updated charging and discharging power curve, and continuously perform the charging/discharging processing on the electric vehicle according to the updated charging and discharging power curve.

12. The apparatus (1000) according to claim 7, further comprising a power regulation module configured to: determine a battery temperature threshold of the electric vehicle and a gun line temperature threshold of the gun line; when a battery temperature indicated in the battery temperature information reaches the battery temperature threshold and/or a gun line temperature indicated in the gun line temperature information reaches the gun line temperature threshold, perform gradient decrease processing on the charging and discharging power curve according to the charging/discharging request, and obtain the updated charging and discharging power curve.

13. A computer device, comprising a processor and a memory storing a computer program, wherein the processor, when executing the computer program, implements the method of any one of claims 1 to 6.

14. A computer-readable storage medium, on which a computer program is stored, wherein the computer program, when executed by a processor, causes the processor to implement the method of any one of claims 1 to 6.

15. A computer program product, comprising a computer program, wherein the computer program, when executed by a processor, causes the processor to implement the method of any one of claims 1 to 6.
